(19) Europäisches Patentamt / European Patent Office / Office européen des brevets

(11) **EP 4 388 685 B1**

(12) **FASCICULE DE BREVET EUROPÉEN**

(45) Date de publication et mention de la délivrance du brevet:
**02.07.2025 Bulletin 2025/27**

(21) Numéro de dépôt: **22769765.3**

(22) Date de dépôt: **19.08.2022**

(51) Classification Internationale des Brevets (IPC):
**H04B 10/2569** (2013.01)   **H04B 10/2507** (2013.01)
**H04B 10/516** (2013.01)   **H04J 14/06** (2006.01)

(52) Classification Coopérative des Brevets (CPC):
**H04J 14/06; H04B 10/2569; H04B 10/2572; H04B 10/516**

(86) Numéro de dépôt international:
**PCT/FR2022/051589**

(87) Numéro de publication internationale:
**WO 2023/021260 (23.02.2023 Gazette 2023/08)**

(54) **MÉTHODE DE CODAGE IQ POUR SYSTÈME DE COMMUNICATION WDM SUR FIBRE OPTIQUE**

I/Q-KODIERUNGSVERFAHREN FÜR EIN WDM ÜBERTRAGUNGSSYSTEM ÜBER EINE OPTISCHE FASER

I/Q CODING METHOD FOR WDM COMMUNICATION SYSTEM OVER OPTICAL FIBRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.08.2021 FR 2108804**

(43) Date de publication de la demande:
**26.06.2024 Bulletin 2024/26**

(73) Titulaire: **MIMOPT Technology**
**75014 Paris (FR)**

(72) Inventeurs:
• **REKAYA, Ghaya**
ANTONY 92160 (FR)
• **ABOUSEIF, Akram**
**75013 PARIS (FR)**

(74) Mandataire: **Fidal Innovation**
**4-6 avenue d'Alsace**
**92400 Courbevoie (FR)**

(56) Documents cités:
**WO-A1-2016/145493    US-A1- 2014 219 653**

• **CHEN ZHU ET AL: "Improved polarization dependent loss tolerance for polarization multiplexed coherent optical systems by polarization pairwise coding", OPTICS EXPRESS, vol. 23, no. 21, 9 October 2015 (2015-10-09), pages 27434 - 27447, XP055418755, DOI: 10.1364/OE.23.027434**

**Description**

**DOMAINE TECHNIQUE**

La présente invention concerne le domaine des communications sur fibres optiques et plus particulièrement les communications à multiplexage en longueur d'onde ou WDM (*Wavelength Division Multiplexing*).

**ÉTAT DE LA TECHNIQUE ANTÉRIEURE**

Les systèmes de communication WDM sur fibres optiques couramment utilisés atteignent des débits de transmission de l'ordre de plusieurs Tb/s. Différents types de systèmes WDM sont connus dans l'état de la technique, certains étant définis en longueurs d'onde (CWDM pour *Coarse Wavelength Division Multiplexing*) et d'autres, plus récents, étant définis en fréquences (DWDM pour *Dense* WDM). La différence entre les systèmes CWDM et DWDM est essentiellement l'espacement entre canaux de transmission. Lorsque les canaux de transmission sont jointifs voire chevauchants, on parle respectivement de supercanal WDM (*superchannel*) et de supercanal de Nyquist (*Nyquist superchannel*). Le terme WDM sera employé dans la suite dans son acception générale et couvrira les différents types de systèmes précités.

Le recours à des ordres de modulation élevés ainsi que le multiplexage sur polarisations orthogonales ont permis d'accroître encore davantage la capacité de ces systèmes de communication mais ces progrès se heurtent désormais à différentes limitations.

Tout d'abord, l'accroissement de la densité des canaux de transmission WDM et corrélativement le rapprochement des sous-porteuses, conduit à une augmentation du niveau d'interférence inter-canal ou ICI (*Inter Channel Interference*). Cette interférence peut être combattue en adoptant une mise en forme idéalement rectangulaire des canaux dans le domaine fréquentiel, autrement dit par une forme d'onde selon une fonction sync dans le domaine temporel (mise en forme dite de Nyquist). Bien entendu, en pratique la mise en forme est imparfaite et une interférence inter-canal résiduelle subsiste.

Ensuite, différents phénomènes de dispersion tels que la dispersion chromatique ou CD (*Chromatic Dispersion*), la dispersion de polarisation ou PMD (*Polarization Mode Dispersion*) et l'atténuation dépendante de la polarisation ou PDL (*Polarization Dependent Loss*) augmentent le taux d'erreur (BER) dans les différents canaux. Or, si les deux premiers peuvent être compensés de manière numérique à la réception, le dernier ne peut l'être en raison de son caractère non-unitaire, ce qui dégrade les performances des systèmes de transmission WDM en termes de BER en fonction du débit, et donc de capacité de transmission.

Il a été proposé dans la thèse d'Elie Awad intitulée « Emerging space-time coding techniques for optical fiber transmission systems », publiée en 2015, de recourir à des techniques de codage spatio-temporel pour combattre la dégradation de la capacité de transmission due à la PDL. Toutefois ces techniques de codage complexifient l'émetteur et le récepteur puisque le bloc de symboles d'information à transmettre est codé sur plusieurs intervalles de transmission successifs ou TTIs (*Time Transmission Intervals*) et, de manière plus générale, sur plusieurs utilisations de canal ou CUs (*Channel Uses*).

Une méthode de précodage sur polarisations orthogonales pour combattre la réduction de capacité en raison de la PDL a été décrite dans l'article de C. Zhu et al. intitulé « Improved polarization dependent loss tolerance for polarization multiplexed coherent optical systems by polarization pairwise coding » publié dans Optics Express, vol. 23, no. 21, 9 octobre 2015, pp. 27434-27447.

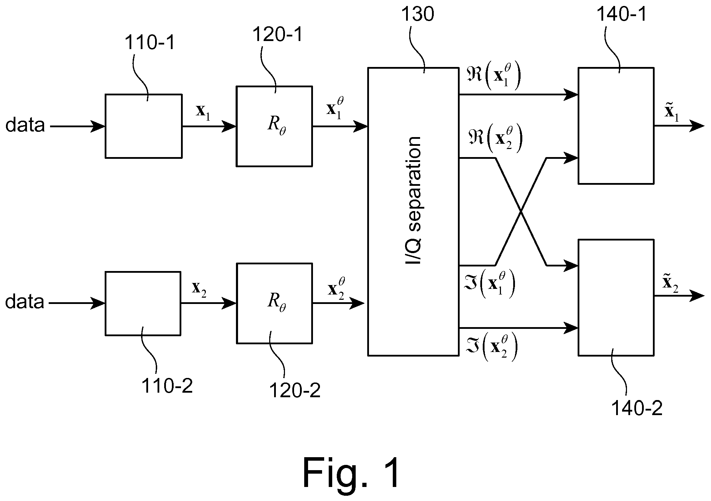

Cette méthode de précodage sur polarisations orthogonales a été illustrée schématiquement en Fig. 1.

Les symboles d'information (mots binaires) à transmettre sont convertis en symboles d'une constellation de modulation dans les modulateurs $q$-aire à symbole 110-1 et 110-2. Les symboles de modulation obtenus, $\mathbf{x}_1, \mathbf{x}_2$ font ensuite l'objet d'une rotation d'angle $\theta$ dans le plan complexe au moyen des modules de rotation respectifs 120-1 et 120-2 pour obtenir des symboles tournés, $\mathbf{x}_1^{\theta}, \mathbf{x}_2^{\theta}$. La partie réelle du premier symbole tourné et la partie réelle du second symbole tourné sont combinées en 130-1 pour fournir un premier symbole d'émission, $\tilde{\mathbf{x}}_1 = \Re\left(\mathbf{x}_1^{\theta}\right) + j\Re\left(\mathbf{x}_2^{\theta}\right)$, porté par une première composante de polarisation (par exemple un état de polarisation horizontale). De manière similaire, la partie imaginaire du premier symbole tourné et la partie imaginaire du second symbole tourné sont combinées en 130-2 pour fournir un second symbole d'émission $\tilde{\mathbf{x}}_2 = \Im\left(\mathbf{x}_1^{\theta}\right) + j\Im\left(\mathbf{x}_2^{\theta}\right)$, porté par une seconde composante de polarisation orthogonale à la première (par exemple un état de polarisation verticale).

Le signal lumineux dont les composantes de polarisation orthogonales ont été respectivement modulées par les symboles d'émission $\mathbf{X}_1, \mathbf{X}_2$ est ensuite transmis sur la fibre optique.

La méthode de précodage décrite dans cet article ne s'applique toutefois qu'à un système de transmission à une seule porteuse et non à un système de transmission WDM.

WO 2016/145,493 décrit une méthode comprenant les caractéristiques du préambule de la revendication 1.

Un objet de la présente invention est par conséquent de proposer une méthode de transmission WDM sur fibre optique qui permette d'atteindre des capacités de transmission élevées en dépit de la PDL et de l'interférence entre canaux adjacents tout en ne requérant qu'une seule utilisation de canal de transmission pour transmettre un bloc de symboles d'information.

## EXPOSÉ DE L'INVENTION

La présente invention est définie par une méthode de transmission WDM sur fibre optique à dualité de polarisation, destinée à transmettre, pendant une utilisation de canal, $2N$ symboles appartenant à une constellation de modulation dans le plan complexe, $N$ étant le nombre de canaux WDM utilisés pour la transmission, ladite méthode comprenant :

lesdits symboles subissent une séparation en partie réelle et partie imaginaire pour fournir un premier vecteur constitué des parties réelles de ces symboles et un second vecteur constitué des parties imaginaires de ces mêmes symboles ;
une première transformation linéaire orthogonale est appliquée au premier vecteur pour fournir un premier vecteur transformé ;
une seconde transformation linéaire orthogonale, distincte de la première, est appliquée au second vecteur pour fournir un second vecteur transformé ;

un scalaire complexe, solution d'un polynôme irréductible de $\mathbb{R}[X]$ dans $\mathbb{R}$ est multiplié au premier ou bien au second vecteur transformé, avant que les deux vecteurs transformés ne soient sommés pour fournir un vecteur constitué de $2N$ symboles d'émission complexes, chaque symbole d'émission complexe modulant un premier état et un second état de polarisation d'un canal WDM.

Selon un mode préférentiel de réalisation, la première transformation linéaire est la composition d'une première rotation avec une première permutation non triviale et/ou une première réflexion non triviale dans $\mathbb{R}^{2N}$ et que la seconde transformation linéaire est la composition d'une seconde rotation avec une seconde permutation non triviale et/ou une seconde réflexion non triviale dans $\mathbb{R}^{2N}$.

Selon un premier exemple, la première permutation peut être composée d'une pluralité paire de transpositions et que la seconde permutation est composée d'une pluralité impaire de transpositions, ou réciproquement.

La première rotation et la seconde rotation peuvent être choisies identiques.

Alternativement, la première transformation linéaire orthogonale peut être choisie égale à l'identité.

Quel que soit le mode de réalisation, le scalaire complexe, $\alpha$, peut être avantageusement choisi tel que $\alpha^{2N}$ ne soit pas un réel positif.

Le scalaire complexe peut par exemple être égal à $j$ avec $j^2 = -1$. Dans ce cas, le le nombre $N$ peut être choisi impair avec $N \geq 3$.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique un dispositif de transmission sur fibre optique utilisant un pré-codage sur deux polarisations orthogonales ;
La Fig. 2 représente de manière schématique un dispositif de transmission WDM sur fibre optique à codage IQ selon un mode général de réalisation de l'invention ;
La Fig. 3 représente de manière schématique un dispositif de transmission WDM sur fibre optique à codage IQ selon un mode préférentiel de réalisation de l'invention ;
La Fig. 4 représente de manière schématique un dispositif de transmission WDM sur fibre optique à codage IQ selon un premier exemple de réalisation de l'invention ;
La Fig. 5 représente de manière schématique un dispositif de transmission WDM sur fibre optique à codage IQ selon un second exemple de réalisation de l'invention ;
Les Figs. 6A-6C montrent le gain apporté par un dispositif de transmission WDM selon l'invention pour différentes hypothèses de nombre de canaux ;
Les Figs 7A-7C montrent le gain apporté par un dispositif de transmission WDM selon l'invention pour différentes hypothèses de PDL dans la fibre optique.

**EXPOSÉ DÉTAILLÉ DE MODES DE RÉALISATION PARTICULIERS**

Nous considérerons dans la suite un système de transmission WDM sur fibre optique et supposerons que cette fibre est classiquement affectée par une atténuation PDL, autrement dit que les différents états de polarisation dans la fibre ne subissent pas la même atténuation. On rappelle que l'atténuation PDL est généralement introduite par des éléments optiques entre tronçons de fibre, notamment des amplificateurs optiques à fibre dopée (EDFA) qui créent des pertes d'énergie et des fluctuations de rapport de signal optique à bruit ou OSNR (Optical Signal to Noise Ratio). Abstraction sera faite en revanche des effets dispersifs dans la fibre tels que la dispersion chromatique (CD) et la dispersion de polarisation (PMD) dans la mesure où ces effets peuvent être corrigés efficacement par l'égalisation de canal dans le DSP du récepteur.

L'effet de l'atténuation PDL pour un canal WDM (et un seul mode spatial) peut s'exprimer par la matrice $\mathbf{H}_{PDL}$ s'appliquant aux deux états de polarisation :

$$\mathbf{H}_{PDL} = \mathbf{D}_\gamma \mathbf{R}_\varphi \mathbf{B}_\beta$$

où $\mathbf{D}_\gamma = \begin{pmatrix} \sqrt{1+\gamma} & 0 \\ 0 & \sqrt{1-\gamma} \end{pmatrix}$ est la matrice de gain, $\mathbf{R}_\varphi = \begin{pmatrix} \cos\varphi & -\sin\varphi \\ \sin\varphi & \cos\varphi \end{pmatrix}$ est la matrice de rotation de la

polarisation et $\mathbf{B}_\beta = \begin{pmatrix} \exp(i\beta) & 0 \\ 0 & \exp(i\beta) \end{pmatrix}$ est la matrice de biréfringence avec $\gamma \in [0,1]$ définissant la valeur de

PDL, $\Gamma_{db} = \log_{10}(\Gamma)$, avec $\Gamma = \dfrac{1+\gamma}{1-\gamma}$ et $\varphi, \beta \in [-\pi,\pi]$.

Le système de transmission WDM utilise une pluralité $N$ de canaux WDM (longueurs d'onde ou sous-porteuses), chaque canal WDM étant associé à deux états de polarisation. Ainsi, à chaque instant de transmission, autrement dit à chaque usage du canal, le système de transmission peut transmettre $2N$ symboles de modulation, un symbole étant transmis par état de polarisation et par canal WDM. Le nombre $N$ est choisi généralement élevé, de l'ordre de plusieurs dizaines voire de plusieurs centaines. En tout état de cause $N > 1$ et, de préférence, $N > 2$.

L'idée à la base de la présente invention est de séparer les parties réelles et les parties imaginaires des différents symboles de modulation et de leur faire subir des transformations linéaires orthogonales distinctes avant de les recombiner dans le plan complexe pour moduler ensuite avec les symboles obtenus les différentes longueurs d'onde/les différentes sous-porteuses du multiplex WDM. On effectue ainsi un moyennage de l'atténuation PDL sur les différents états de polarisation et les différents canaux WDM.

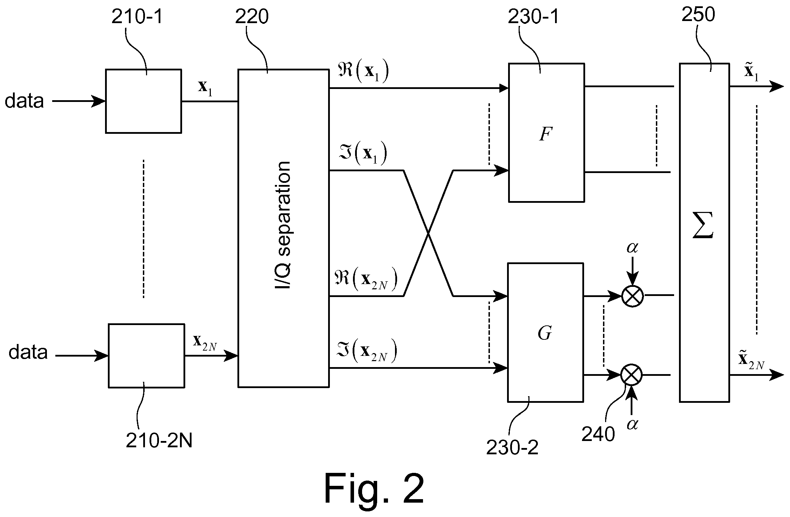

La Fig. 2 représente schématiquement un dispositif de transmission WDM sur fibre optique selon un mode général de réalisation de l'invention.

Les données à transmettre à chaque intervalle de transmission se présentent sous la forme de $2N$ symboles d'information, par exemple $2N$ mots $q$-aires avec $q \le \log_2 Q$ où $Q$ est le cardinal de l'alphabet de modulation. L'alphabet de modulation peut notamment être un alphabet $Q$-QAM.

Les symboles d'information peuvent résulter eux-mêmes d'un codage source et/ou d'un codage canal, de manière connue en soi.

Dans tous les cas, les $2N$ symboles d'information sont respectivement convertis en $2N$ symboles de modulation dans les modulateurs $q$-aire à symbole 210-1,...,210-2N. Les indices impairs de ces symboles correspondent à un premier état de polarisation et les indices pairs à un second état de polarisation, orthogonal au premier. Chacun de ces symboles de modulation, notés dans la suite $\mathbf{x}_1,...,\mathbf{x}_{2N}$, est ensuite soumis à une décomposition en partie réelle et une partie imaginaire dans le module de séparation I/Q, 220.

Les parties réelles respectives de ces symboles de modulation $\Re(\mathbf{x}_1),..., \Re(\mathbf{x}_{2N})$ forment un vecteur $\mathbf{X}_R$ de $\mathbb{R}^{2N}$ qui est fourni à un premier module de combinaison linéaire 230-1. Ce premier module combine ces parties réelles au moyen d'une première transformation linéaire orthogonale, $F$, représentée par une matrice $F \in O(2N, \mathbb{R})$, pour

fournir un premier vecteur transformé, $\tilde{\mathbf{X}}_R$, dans $\mathbb{R}^{2N}$.

De manière similaire, les parties imaginaires des symboles de modulation forment un vecteur $\mathbf{X}_I$ de $\mathbb{R}^{2N}$ qui est fourni à un second module de combinaison linéaire, 230-2. Ce second module combine ces parties imaginaires au moyen d'une seconde transformation linéaire orthogonale, G, représentée par une matrice $\boldsymbol{G} \in O(2N, \mathbb{R})$, pour fournir un second vecteur transformé, $\tilde{\mathbf{X}}_I$, dans $\mathbb{R}^{2N}$.

Les transformations linéaires orthogonales *F* et *G* sont avantageusement choisies distinctes. Par exemple, l'une d'elles pourra être une transformation linéaire orthogonale directe, autrement dit la matrice correspondante sera un élément du groupe spécial orthogonal $SO(2N, \mathbb{R})$, et l'autre sera une transformation linéaire orthogonale indirecte.

Le second vecteur transformé est ensuite multiplié en 240 par une valeur scalaire complexe $\alpha$, solution d'un polynôme de $\mathbb{R}[X]$, irréductible dans $\mathbb{R}$. De préférence, $\alpha$ sera choisi pour ne pas être une norme d'un élément dans le plan complexe, autrement dit $\alpha^{2N}$ ne devra pas être un réel positif. Le premier vecteur transformé et le second vecteur transformé ainsi multiplié sont enfin sommés dans le sommateur 250 pour fournir un vecteur de $\mathbb{C}^{2N}$, $\tilde{\mathbf{X}}$ dont les éléments complexes, $\tilde{x}_1,...,\tilde{x}_{2N}$, sont des symboles d'émission respectivement utilisés pour moduler les *2N* états de polarisation des *N* canaux WDM. Plus précisément la composante d'un premier état de polarisation (par exemple une composante de polarisation horizontale) d'un canal WDM d'indice n sera donnée par $\Re(\tilde{x}_n)$ et celle d'un second état de polarisation (par exemple une composante de polarisation verticale) de ce canal sera donnée par $\Im(\tilde{x}_n)$, ou vice-versa.

En définitive, le vecteur $\tilde{\mathbf{X}}$ peut s'exprimer, à un coefficient multiplicatif près, sous la forme :

$$\tilde{\mathbf{X}} = \mathbf{F}\mathbf{X}_R + \alpha\mathbf{G}\mathbf{X}_I \tag{1}$$

Selon une variante non représentée, le premier vecteur transformé est multiplié par la valeur scalaire complexe $\alpha$ en lieu et place du second vecteur transformé, le premier vecteur transformé ainsi multiplié étant ensuite sommé avec le second vecteur transformé pour fournir le vecteur $\tilde{\mathbf{X}}$.

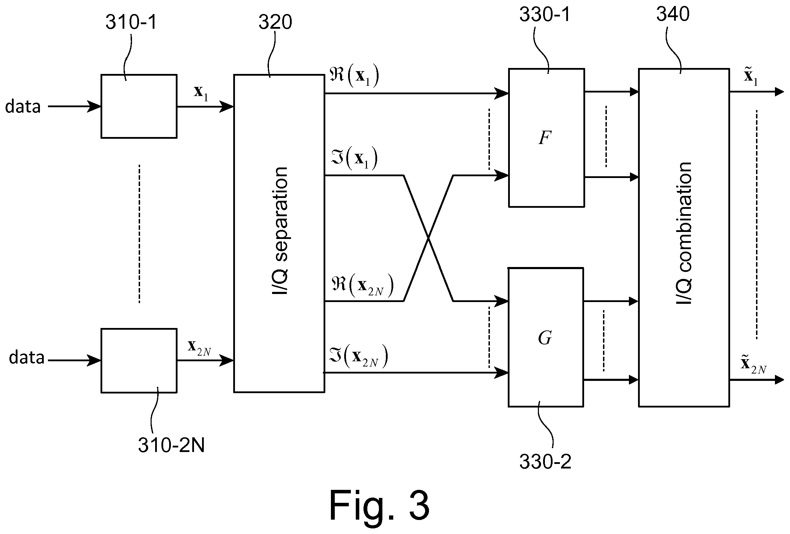

La Fig. 3 représente de manière schématique un dispositif de transmission WDM sur fibre optique selon un mode préférentiel de réalisation de l'invention.

Les modules 310-1,...,310-2N, 320, 330-1 et 330-2 remplissent ici respectivement les mêmes fonctions que les modules 210-1,...,210-2N, 220, 230-1 et 230-2 dans la Fig. 2.

A la différence du mode de réalisation illustré en Fig. 2, le premier vecteur transformé et le second vecteur transformé sont combinés par le module de combinaison I/Q, 340, pour former le vecteur complexe X = $\tilde{\mathbf{X}}_R$ + $j\tilde{\mathbf{X}}_I$ dans $\mathbb{C}^{2N}$. Autrement dit, ce mode de réalisation se déduit comme cas particulier du mode général de réalisation avec $\alpha$ =*j*, le module de combinaison I/Q remplaçant ici le multiplieur 240 et le sommateur 250.

Avantageusement, le scalaire complexe $\alpha$ n'est pas une norme, autrement dit *N* est choisi impair avec $N \geq 3$.

Les éléments complexes $\tilde{x}_1,...,\tilde{x}_{2N}$ du vecteur $\tilde{\mathbf{X}}$ sont respectivement utilisés pour moduler les *2N* états de polarisation des *N* sous-porteuses/longueurs d'onde WDM.

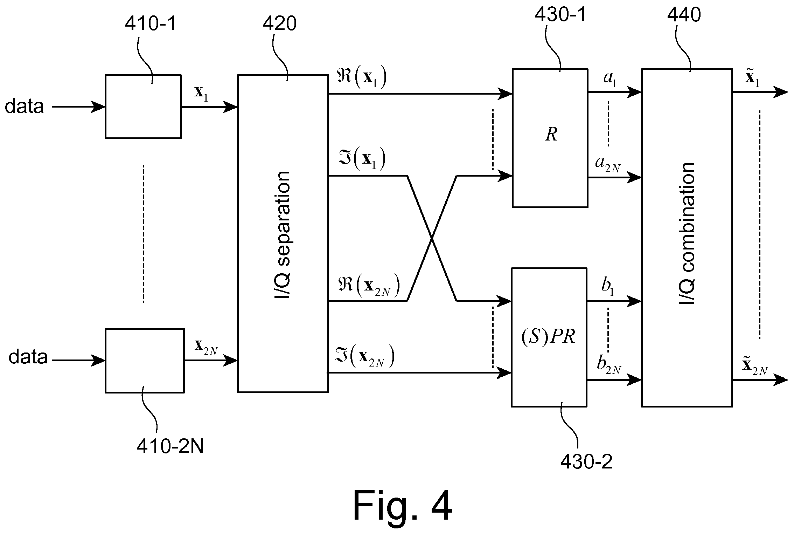

La Fig. 4 représente de manière schématique un dispositif de transmission WDM sur fibre optique à codage IQ selon un premier exemple de réalisation de l'invention.

Les modules 410-1,...,410-2N, 420, 430-1, 430-2, 440 remplissent respectivement les mêmes fonctions que les modules 310-1,...,310-2N, 320, 330-1, 330-2 et 340 de la Fig.3.

Cet exemple de réalisation est un cas particulier du mode de réalisation préférentiel de la Fig. 3 en ce que la première transformation linéaire est directe, c'est-à-dire une rotation *R* dans l'espace dans $\mathbb{R}^{2N}$.

La seconde transformation linéaire résulte de la composition de cette rotation *R* avec une permutation non triviale *P* dans $\mathbb{R}^{2N}$ et/ou une réflexion non triviale *S* dans $\mathbb{R}^{2N}$. Par permutation non triviale, on entend une permutation distincte de l'identité $Id_{\mathbb{R}^{2N}}$. Par réflexion non triviale, on entend une réflexion distincte de $-Id_{\mathbb{R}^{2N}}$.

La permutation peut être composée d'un nombre pair de transpositions auquel cas la seconde transformation linéaire est encore une rotation, ou bien être composée d'un nombre impair de telles transpositions.

La permutation peut être cyclique, la seconde transformation linéaire étant alors représentée par la matrice **PR** où $\mathbf{P} \in \{\Phi, \Phi^2,..., \Phi^{2N-1}\}$ ensemble des permutations possibles (hormis la permutation triviale) et où $\Phi$ est la matrice de permutation cyclique définie par :

$$\mathbf{\Phi} = \begin{pmatrix} 0 & 1 & 0 & \cdots & 0 \\ 0 & 0 & 1 & \cdots & 0 \\ \vdots & & \ddots & \ddots & \vdots \\ 0 & 0 & \cdots & 0 & 1 \\ 1 & 0 & \cdots & 0 & 0 \end{pmatrix}$$

Comme dans le cas général, les rôles des première et seconde transformations linéaires peuvent être interchangés. Autrement dit, la rotation $R$ peut être appliquée au vecteur des parties imaginaires $\mathbf{X}_I$ et la composée de la rotation et de la permutation et/ou la réflexion $(S)PR/$ $S(P)R$ peut être appliquée au vecteur des parties réelles $\mathbf{X}_R$.

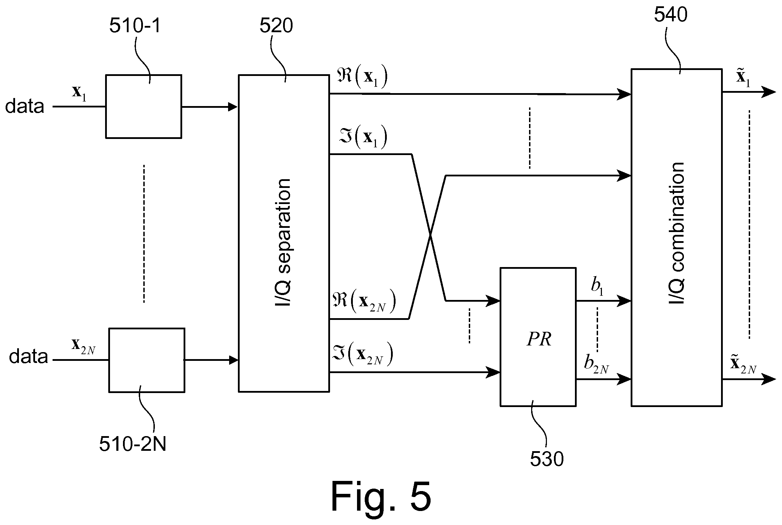

La Fig. 5 représente de manière schématique un dispositif de transmission WDM sur fibre optique à codage IQ selon un second exemple de réalisation de l'invention.

Les modules 510-1,...,510-2N, 520, 530, 540 remplissent respectivement les mêmes fonctions que les modules 310-1,...,310-2N, 320, 530-2 et 540 de la Fig.3.

Cet exemple de réalisation est un cas particulier du mode de réalisation préférentiel de la Fig. 3 en ce que la première transformation linéaire est triviale et égale à l'identité $Id_{\mathbb{R}^{2N}}$, et que la seconde transformation linéaire résulte de la composition de cette rotation $R$ avec une permutation $P$ triviale ou non dans $\mathbb{R}^{2N}$.

Le premier vecteur et le second vecteur transformé sont ici combinés pour former le vecteur complexe $\tilde{\mathbf{X}}$ des symboles destinés à moduler les 2$N$ états de polarisation comme précédemment.

Dans tous les cas, le signal optique reçu est démultiplexé en canal WDM (longueur d'onde ou sous-porteuse) et en état de polarisation puis égalisé pour compenser la dispersion chromatique (CD). Le canal MIMO 2$N \times$2$N$ est ensuite estimé, par exemple à l'aide d'un algorithme LS (*Least Squares*) à partir de symboles pilotes. Les symboles émis par le dispositif de transmission peuvent être ensuite estimés à l'aide d'un décodeur MIMO utilisant une estimation ML (*Maximum* Likelihood) voire plus simplement une estimation ZF (*Zero Forcing*) visant à multiplier le signal reçu par le pseudo-inverse de la matrice du canal, à savoir $\widehat{\tilde{X}} = (H^H H)^{-1} H^H Y$ où Ĥ de taille 2$N \times$ 2$N$ est la matrice estimée du canal MIMO.

Après séparation des parties réelles et imaginaires de chacune des composantes de $\widehat{\tilde{X}}$ et formation d'un premier vecteur $\overline{\mathbf{X}}_R$ constitué des 2$N$ parties réelles et d'un second vecteur $\tilde{\mathbf{X}}_t$ constitué des 2N parties imaginaires, on applique une première transformation orthogonale inverse $\mathbf{F}^{-1}$ au premier vecteur $\overline{\mathbf{X}}_R$ et une seconde transformation orthogonale inverse $\mathbf{G}^{-1}$ au second vecteur, multiplié par $\alpha^{-1}$, $\alpha^{-1}\overline{\mathbf{X}}_I$. On peut ensuite estimer les parties réelles et imaginaires des symboles de modulation à partir des composantes de même rang des vecteurs ainsi obtenus.

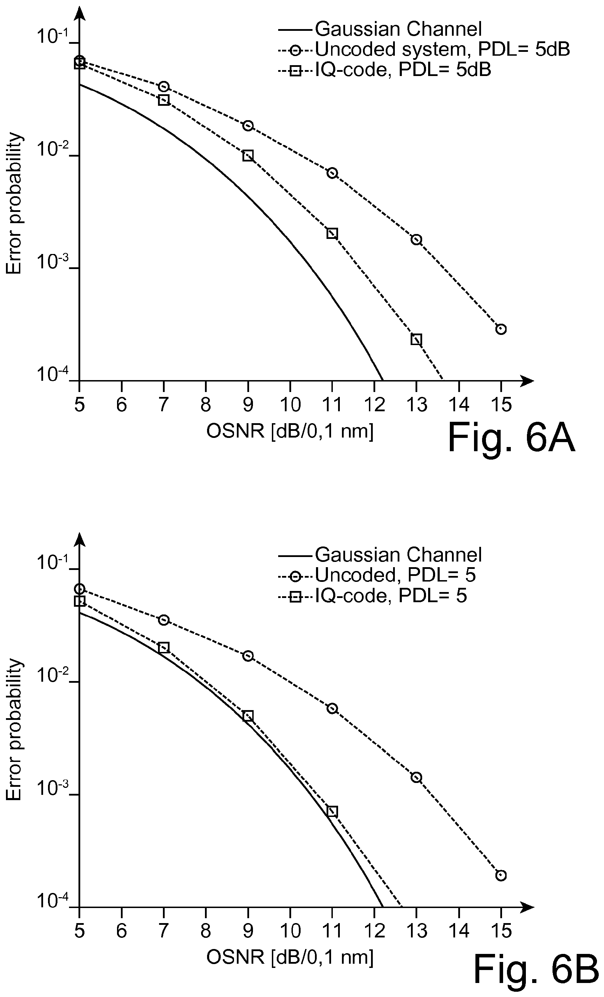

Les Figs. 6A-6C montrent le gain apporté par un dispositif de transmission WDM selon l'invention pour différentes hypothèses de nombre de canaux WDM.

On a supposé que la valeur de PDL, $\Gamma_{dB}$ était identique pour tous les canaux WDM et égal à 5dB, la rotation de polarisation, $\varphi$ était égale à $\pi$ / 2.

La fibre optique était constituée de 10 tronçons de 100 kms chacun, un amplificateur optique à gain constant en longueur d'onde étant prévu entre tronçons consécutifs. Le débit symbole était de 12 Gbauds et la constellation de modulation était une 16-QAM. Les sous-bandes correspondant aux différents canaux WDM étaient non chevauchantes et les signaux transmis dans chaque sous-bande étaient mis en forme par un filtre en racine de cosinus surélevé avec un facteur de roll-off de 0.1.

Le mode de réalisation choisi était celui de la Fig. 5 avec $P = Id_{2N}$.

L'estimation à la réception était réalisée au moyen d'un estimateur ML.

La Fig. 6A donne le taux d'erreur binaire (BER) en fonction du rapport signal sur bruit optique (OSNR) dans la fibre pour $N$ = 2 longueurs d'onde. Dans ce cas, on a $\alpha^{2N}$ =1 mais on observe toutefois un gain (de OSNR) de 2dB par rapport à un système WDM non codé IQ, l'écart avec le canal idéal (canal gaussien) étant seulement de 0.6 dB.

La Fig. 6B donne le BER en fonction du OSNR pour $N$ = 3 longueurs d'onde. Dans ce cas, on a $\alpha^{2N}$ = -1. On observe un gain de 2.6dB plus important que dans le cas précédent et l'écart avec le canal idéal est négligeable, autrement dit l'effet de la PDL est quasi-entièrement corrigé par le moyennage.

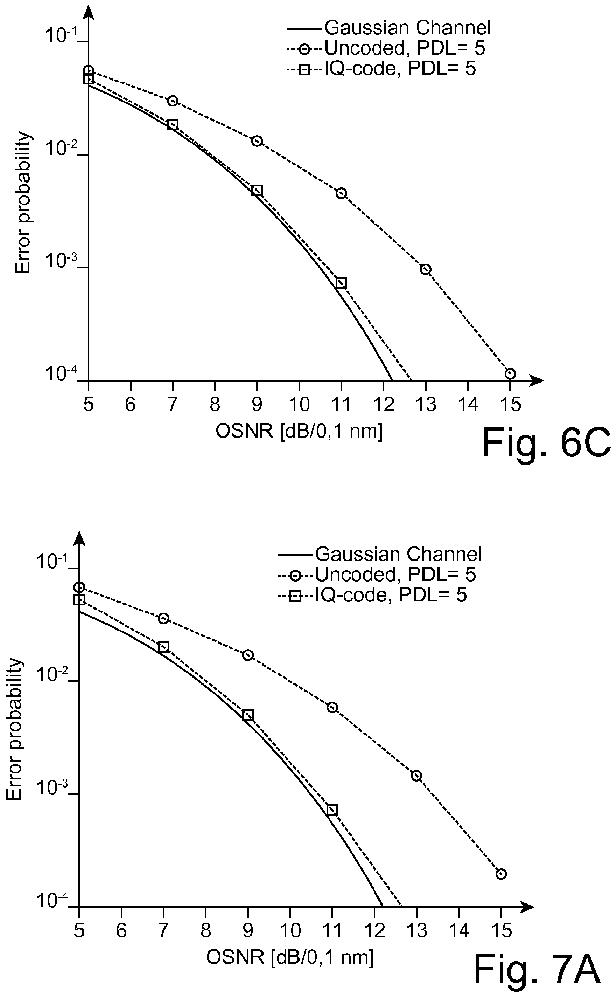

La Fig. 6C donne le BER en fonction du OSNR pour $N$ = 5 longueurs d'onde. La propriété $\alpha^{2N}$ = -1 est encore vérifiée et les performances obtenues sont sensiblement les mêmes que pour $N$ = 3.

Les Figs 7A-7C montrent le gain apporté par un dispositif de transmission WDM selon l'invention pour différentes hypothèses de PDL dans la fibre optique.

On se place dans le cas précédent où $N$ = 3 longueurs d'onde mais l'on considère différentes configurations de PDL.

En Fig. 7A, on a supposé que la PDL, $\Gamma_{db}$, était identique sur les trois canaux et égale à 5dB. Le codage IQ selon la présente invention permet d'atteindre un gain de 1.8 dB par rapport au cas non codé et ne présente qu'un écart de 1dB par rapport au canal gaussien.

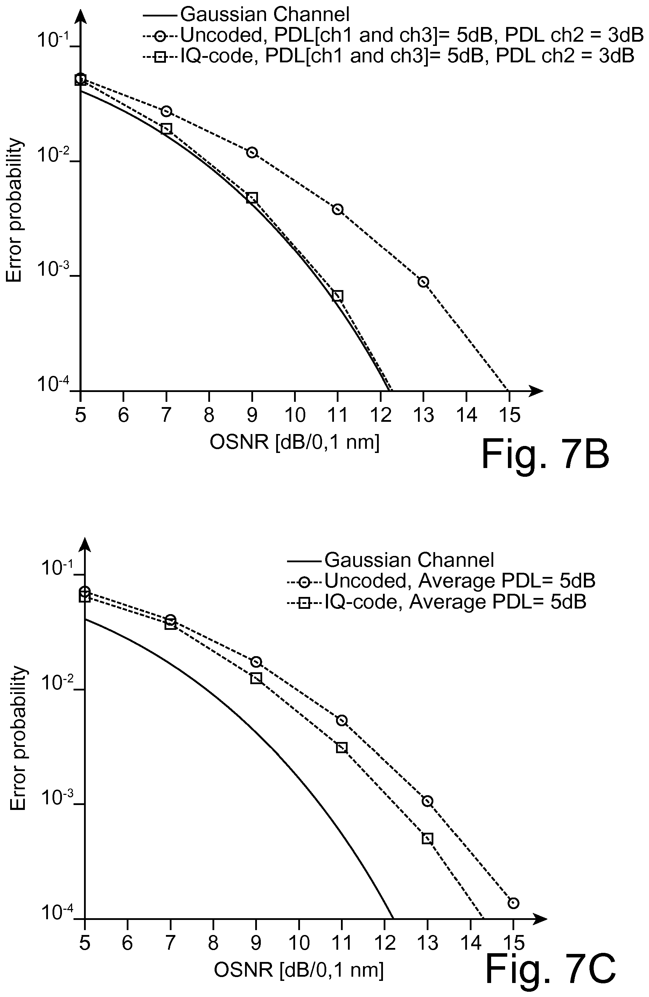

En Fig. 7B on a supposé que la PDL, $\Gamma_{db}$, sur les canaux 1 et 3 était de 3dB et de 5dB sur le canal 2. Les angles de rotation $\varphi_1,\varphi_2,\varphi_3$ sont tirés au sort à partir d'une distribution de probabilité uniforme sur $[-\pi,\pi]$. Le codage IQ selon la présente invention permet d'atteindre un gain de 2 dB par rapport au cas non codé et ne présente qu'un écart de 0.6 dB par rapport au canal gaussien.

Enfin, en Fig. 7C on a supposé que la PDL en sortie en chaque amplificateur optique suivait une loi gaussienne et que, par conséquent, la distribution de probabilité de la PDL en sortie de fibre suivait une distribution de Maxwell. La moyenne de la PDL a été choisie égale à 5dB. Là encore, la méthode de transmission selon la présente invention permet d'atteindre, dans le plus défavorable, un gain de 1dB par rapport au cas non-codé.

## Revendications

1. Méthode de transmission WDM sur fibre optique à dualité de polarisation, destinée à transmettre, pendant une utilisation de canal, 2N symboles appartenant à une constellation de modulation dans le plan complexe, N > 1 étant le nombre de canaux WDM utilisés pour la transmission, dans laquelle :

   lesdits symboles subissent une séparation en partie réelle et partie imaginaire (220-520) pour fournir un premier vecteur constitué des parties réelles de ces symboles et un second vecteur constitué des parties imaginaires de ces mêmes symboles ;
   **caractérisée en ce que** la méthode de transmission comprend :
   une première transformation linéaire orthogonale (230-1,..,430-1) est appliquée au premier vecteur pour fournir un premier vecteur transformé ;
   une seconde transformation linéaire orthogonale (230-2,..,530-2), distincte de la première, est appliquée au second vecteur pour fournir un second vecteur transformé ;

   un scalaire complexe, solution d'un polynôme irréductible de $\mathbb{R}[X]$ dans $\mathbb{R}$ est multiplié au premier ou bien au second vecteur transformé, avant que les deux vecteurs transformés ne soient sommés pour fournir un vecteur constitué de 2*N* symboles d'émission complexes, chaque symbole d'émission complexe modulant un premier état et un second état de polarisation d'un canal WDM.

2. Méthode de transmission WDM sur fibre optique à dualité de polarisation selon la revendication 1, **caractérisée en ce que** la première transformation linéaire est la composition d'une première rotation avec une première permutation non triviale et/ou une première réflexion non triviale dans $\mathbb{R}^{2N}$ et que la seconde transformation linéaire est la composition d'une seconde rotation avec une seconde permutation non triviale et/ou une seconde réflexion non triviale dans $\mathbb{R}^{2N}$.

3. Méthode de transmission WDM sur fibre optique à dualité de polarisation selon la revendication 2, **caractérisée en ce que** la première permutation est composée d'une pluralité paire de transpositions et que la seconde permutation est composée d'une pluralité impaire de transpositions, ou réciproquement.

4. Méthode de transmission WDM sur fibre optique à dualité de polarisation selon la revendication 3, **caractérisée en ce que** la première rotation et la seconde rotation sont identiques.

5. Méthode de transmission WDM sur fibre optique à dualité de polarisation selon la revendication 2, **caractérisée en ce que** la première transformation linéaire orthogonale est l'identité.

6. Méthode de transmission WDM sur fibre optique à dualité de polarisation selon l'une des revendications précédentes, **caractérisée en ce que** le scalaire complexe, $\alpha$ est choisi tel que $\alpha^{2N}$ ne soit pas un réel positif.

7. Méthode de transmission WDM sur fibre optique à dualité de polarisation selon la revendication 5, **caractérisée en ce que** le scalaire complexe est égal à $j$ avec $j^2 = -1$.

8. Méthode de transmission WDM sur fibre optique à dualité de polarisation selon la revendication 7, **caractérisée en ce**

**que** le nombre $N$ est impair avec $N \geq 3$.

**Patentansprüche**

1. Verfahren zur WDM-Übertragung über eine optische Faser mit dualer Polarisation, bei dem während der Nutzung eines Kanals $2N$ Symbole übertragen werden, die einer Modulationskonstellation in der komplexen Ebene angehören, wobei $N > 1$ die Anzahl der für die Übertragung verwendeten WDM-Kanäle ist, und in dem:

   die genannten Symbole in Realteil und Imaginärteil (220-520) zerlegt werden, um einen ersten Vektor bereitzustellen, der aus den Realteilen dieser Symbole besteht, und einen zweiten Vektor, der aus den Imaginärteilen derselben Symbole besteht;
   **dadurch gekennzeichnet, dass** das Übertragungsverfahren folgendes umfasst:

   eine auf den ersten Vektor angewendete erste orthogonale lineare Transformation (230-1,...,430-1), um einen ersten transformierten Vektor bereitzustellen;
   eine auf den zweiten Vektor angewendete zweite orthogonale lineare Transformation (230-2,...,530-2), die sich von der ersten unterscheidet, um einen zweiten transformierten Vektor bereitzustellen;
   einen komplexen Skalar, die Lösung eines irreduziblen Polynoms von R[X] in R, der mit dem ersten oder dem zweiten transformierten Vektor multipliziert wird, bevor die beiden transformierten Vektoren summiert werden, um einen Vektor bereitzustellen, der aus $2N$ komplexen Sendesymbolen besteht, wobei jedes komplexe Sendesymbol einen ersten und einen zweiten Polarisationszustand eines WDM-Kanals moduliert.

2. Verfahren zur WDM-Übertragung über eine optische Faser mit dualer Polarisation nach Anspruch 1, **dadurch gekennzeichnet, dass** die erste lineare Transformation die Zusammensetzung einer ersten Rotation mit einer ersten nicht-trivialen Permutation und/oder einer ersten nicht-trivialen Reflexion in $R^{2N}$ ist und die zweite lineare Transformation die Zusammensetzung einer zweiten Rotation mit einer zweiten nicht-trivialen Permutation und/oder einer zweiten nicht-trivialen Reflexion in $R^{2N}$ ist.

3. Verfahren zur WDM-Übertragung über eine optische Faser mit dualer Polarisation nach Anspruch 2, **dadurch gekennzeichnet, dass** die erste Permutation aus einer geraden Vielzahl von Transpositionen und die zweite Permutation aus einer ungeraden Vielzahl von Transpositionen besteht, oder umgekehrt.

4. Verfahren zur WDM-Übertragung über eine optische Faser mit dualer Polarisation nach Anspruch 3, **dadurch gekennzeichnet, dass** die erste Rotation und die zweite Rotation identisch sind.

5. Verfahren zur WDM-Übertragung über eine optische Faser mit dualer Polarisation nach Anspruch 2, **dadurch gekennzeichnet, dass** die erste orthogonale lineare Transformation die Identität ist.

6. Verfahren zur WDM-Übertragung über eine optische Faser mit dualer Polarisation nach einem der vorhergehenden Ansprüche, **dadurch gekennzeichnet, dass** der komplexe Skalar $\alpha$ so gewählt wird, dass $\alpha^{2N}$ kein positiver reeller Wert ist.

7. Verfahren zur WDM-Übertragung über eine optische Faser mit dualer Polarisation nach Anspruch 5, **dadurch gekennzeichnet, dass** der komplexe Skalar gleich $j$ ist, wobei $j^2 = -1$ ist.

8. Verfahren zur WDM-Übertragung über eine optische Faser mit dualer Polarisation nach Anspruch 7, **dadurch gekennzeichnet, dass** die Zahl $N$ ungerade ist und $N \geq 3$ ist.

**Claims**

1. WDM transmission method over optical fiber with polarization duality, intended to transmit, during one channel use, 2N symbols belonging to a modulation constellation in the complex plane, N > 1 being the number of WDM channels used for transmission, wherein:

   said symbols undergo a separation into real part and imaginary part (220-520) to provide a first vector consisting of the real parts of these symbols and a second vector consisting of the imaginary parts of these same symbols; **characterized in that** the transmission method comprises :

a first orthogonal linear transformation (230-1,..,430-1) is applied to the first vector to provide a first transformed vector;

a second orthogonal linear transformation (230-2,..,530-2), distinct from the first, is applied to the second vector to provide a second transformed vector;

a complex scalar, solution of an irreducible polynome from $\mathbb{R}[X]$ in $\mathbb{R}$ is multiplied to the first or to the second transformed vector, before the two transformed vectors are summed to provide a vector consisting of 2N complex emission symbols, each complex transmission symbol modulating a first state and a second polarization state of a WDM channel.

2.  WDM transmission method over optical fiber with polarization duality according to claim 1, **characterized in that** the first linear transformation is the composition of a first rotation with a first non-trivial permutation and/or a first non-trivial reflection in $\mathbb{R}^{2N}$ and that the second linear transformation is the composition of a second rotation with a second non-trivial permutation and/or a second non-trivial reflection in $\mathbb{R}^{2N}$.

3.  WDM transmission method over optical fiber with polarization duality according to claim 2, **characterized in that** the first permutation is composed of an even plurality of transpositions and that the second permutation is composed of an odd plurality of transpositions, or vice versa.

4.  WDM transmission method over optical fiber with polarization duality according to claim 3, **characterized in that** the first rotation and the second rotation are identical.

5.  WDM transmission method over optical fiber with polarization duality according to claim 2, **characterized in that** the first orthogonal linear transformation is identity.

6.  WDM transmission method over optical fiber with polarization duality according to one of the preceding claims, **characterized in that** the complex scalar, $\alpha$ is chosen such that $\alpha^{2N}$ is not a positive real.

7.  WDM transmission method over optical fiber with polarization duality according to claim 5, **characterized in that** the complex scalar is equal to j with $j^2 = -1$.

8.  WDM transmission method over optical fiber with polarization duality according to claim 7, **characterized in that** the number N is odd with $N \geq 3$.

Fig. 1

Fig. 2

Fig. 3

Fig. 4

Fig. 5

Fig. 6A

Fig. 6B

Fig. 6C

Fig. 7A

Fig. 7B

Fig. 7C

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2016145493 A

**Littérature non-brevet citée dans la description**

• **C. ZHU et al.** Improved polarization dependent loss tolerance for polarization multiplexed coherent optical systems by polarization pairwise coding. *Optics Express*, 09 October 2015, vol. 23 (21), 27434-27447